# FASCICULE DE BREVET EUROPEEN

(11) **EP 3 234 222 B1**
(45) Date de publication et mention de la délivrance du brevet: **17.07.2019**
(21) Numéro de dépôt: 15813447.8
(22) Date de dépôt: 18.12.2015
(51) Int. Cl.: C23C 24/08, H01M 4/04, B01J 13/00, H01M 4/1391

(54) **PROCÉDÉ POUR LE DÉPÔT DE FILMS MINCES PAR VOIE HUMIDE**
VERFAHREN ZUR NASSABSCHEIDUNG VON DÜNNSCHICHTEN
METHOD FOR THE WET DEPOSITION OF THIN FILMS

(30) Priorité: 19.12.2014 BE 201405132
(43) Date de publication de la demande: 25.10.2017
(73) Titulaire: Prayon, 4480 Engis (BE); Université de Liège, 4031 Angleur (BE)
(72) Inventeur: PAEZ, Carlos, 4000 Liège (BE); LIQUET, Dimitri, 4031 Angleur (BE); CALBERG, Cédric, 4130 Esneux (BE); HEINRICHS, Benoît, 4000 Liège (BE); ALIÉ, Christelle, 4000 Liège (BE)
(74) Mandataire: Connor, Marco Tom
(86) Numéro de dépôt international: PCT/EP2015/080694
(87) Numéro de publication internationale: WO 2016/097396

(56) Documents cités:
- EP-A1- 2 784 027
- WO-A1-2007/045716
- WO-A2-2013/171297

## Description

### Domaine de l'invention

L'invention se rapporte aux dépôts de films d'oxyde de métaux de transition par voie humide, par exemple par voie sol-gel. En particulier, l'invention se rapporte au dépôt de films, de préférence minces, d'oxyde de métaux de transition lithié.

L'invention se rapporte aussi à l'utilisation dudit film préparé selon la présente invention comme matériau d'électrode dans une batterie, de préférence une microbatterie.

### État de la technique

L'utilisation de microbatteries, telles que les batteries Li-ion, comprenant des films minces d'oxydes métalliques connaît un essor important dans de nombreux domaines d'applications. Ces films minces sont généralement constitués d'oxyde de métaux de transition lithié, par exemple des oxydes de cobalt, de manganèse ou de nickel ou leur mélange. Ces oxydes sont des matériaux de choix pour la préparation d'un matériau d'électrode grâce à leur forte capacité spécifique d'insertion et leur excellente cyclabilité.

Les films minces d'oxydes métalliques sont principalement préparés par dépôt physique en phase vapeur (PVD). Cette méthode consiste à vaporiser le matériau à basse pression et à le condenser sur le substrat. Deux autres techniques sont régulièrement employées pour former des films minces de métaux de transition : le dépôt laser pulsé (PLD) et la pulvérisation cathodique radiofréquence (RF Sputtering). Le dépôt par PLD est effectué par des impulsions laser envoyées sur une cible pour permettre l'évaporation du matériau. La pulvérisation cathodique radiofréquence consiste à créer un plasma d'argon dans une enceinte de dépôt où les ions Ar⁺ bombardent mécaniquement la cible du matériau pour le déposer sur le substrat. Une étape de recuit à très haute température du matériau formé est nécessaire pour favoriser la formation définitive du matériau. Cette étape de recuit à très haute température est incompatible avec l'intégration des microaccumulateurs sur un circuit électronique souple. La lenteur de ces procédés limite les capacités de production industrielle. De plus, sans traitement thermique à haute température, la capacité massique de ce type de films minces chute fortement après quelques cycles de charge/décharge. Le dépôt chimique en phase vapeur (CVD - vaporisation des précurseurs de métaux de transition à haute température sur le substrat) est une alternative aux techniques précédentes mais ces procédés requièrent des températures plus élevées. En outre, les coûts liés aux investissements à l'exploitation de ces technologies sont très importants.

Afin de pallier les inconvénients des techniques de dépôt sous vide, des méthodes de préparation par voie humide ont été explorées. On connaît par exemple du brevet WO2013171297, la fabrication de films minces de matériaux composites par voie sol-gel. La fabrication consiste, après fonctionnalisation dans un premier solvant alcoolique du substrat, en la préparation d'un sol constitué d'une poudre fonctionnalisée et d'un second solvant alcoolique puis le dépôt du sol sur le substrat pour former une première couche. La calcination du sol à une température comprise entre 50 et 500°C permet l'adhérence du film ainsi formé. De l'oxyde de cobalt lithié a notamment été immobilisé : LiCoO₂ a été préfonctionnalisé dans une solution d'acide carboxylique avant d'être dispersé dans une solution d'éthanol pour former une solution colloïdale. Le sol a pu être déposé sur ALUSI et sur un support en silicium recouvert de platine.

Il est également connu de l'homme de métier que le broyage des poudres de LCO dégrade les propriétés électrochimiques de celles-ci et qu'un traitement thermique est nécessaire pour augmenter ces dernières, notamment Journal of Electroanalytical Chemistry 584 (2005) 147-156 de Alcantara & Ortiz.

De nombreux documents divulguent également des techniques permettant d'améliorer les performances de cyclabilité des matériaux tels que Cheng et al dans J. Phys. Chem. C, 2012, 116 (14), pp 7629-7637, notamment en réalisant des dépôt « atomique » d'alumine ou de dioxyde de titane sur du LiCoO₂. L'article de Ting-Kuo Fey et al dans Surface and Coatings Technology, Volume 199, issue 1, 2005, pages 22 - 31 dévoile différentes technologies mises en oeuvre pour le coating de l'oxyde de titane. Ces auteurs ne caractérisent pas les couches mais seulement les poudres issues de ces traitements et utilisent du PVDF (poly(1,1-difluoroéthylène) comme liant afin de rendre les particules cohérentes entre elles et du carbone pour améliorer la conductivité électrique de l'ensemble avant d'en faire la caractérisation.

Des articles renseignent également comment maitriser la taille de particules de TiO₂ déposées, leur structure, leur texture et la stabilité de la solution ; on connait notamment de Paez et al, Applied Catalysis B : Environmental 94 (2010):263-271, « Unpredictable photocatalytic ability of H-2-reduced rutile-TiO2 xerogel ».

Les films minces préparés par voie sol-gel présentent ainsi régulièrement des problèmes de performance. De plus, les dépôts adhérent aux substrats grâce à des liants qui malheureusement ne peuvent être entièrement éliminés lors de la calcination et rendent le matériau non pur. La fabrication de films minces par voie sol-gel peut donc être améliorée. En outre, les propriétés électrochimiques des matériaux déposés doivent répondre aux exigences nécessaires dans les applications industrielles de type micro-batteries.

### Résumé de l'invention

Un des buts de la présente invention est de fournir, à partir d'une poudre d'oxyde de métaux, un procédé de dépôt de films d'oxyde de métaux de transition améliorés « purs » présentant une bonne adhérence sur un substrat et de bonnes propriétés électrochimiques. Par le terme « pur », on entend selon la présente invention l'absence de résidus carbonés issus du procédé de mise en oeuvre de la poudre et à l'absence de liant et/ ou stabilisant. En outre, l'invention se propose également d'assurer la stabilité des solutions formées pour répondre aux besoins de mise en oeuvre industrielle de cette invention. Enfin, l'invention permet de garantir des performances électrochimiques des couches élaborées en concordance avec les exigences des applications industrielles de type micro-batteries ; ceci en mettant en oeuvre un procédé écologique et faiblement énergivore grâce à la mise en oeuvre de solvants adéquats.

Selon un premier aspect, l'invention fournit un procédé de dépôt de films d'oxyde de métaux de transition, de préférence par voie liquide. Ledit procédé comprend les étapes de :
(a) fourniture d'une poudre d'oxyde de métaux de transition de formule AₐM_{b}O_{c} dans laquelle
   A est un métal alcalin, avantageusement A est choisi parmi le groupe consistant en Li, Na et K, ou leur mélange;
   M est un métal ou un mélange de métaux choisi parmi les métaux de transition, les lanthanides ou les actinides, de préférence M est un métal ou un mélange de métaux de transition choisi parmi les éléments des colonnes 3 à 12 du tableau périodique, avantageusement M est choisi parmi le groupe consistant en Co, Ni, Mn, Fe, Cu, Ti, Cr, V et Zn, et leurs mélanges ;
   O est l'oxygène,
   a, b et c sont des nombres réels supérieurs à 0 ; a, b, c sont choisis de manière à assurer l'électroneutralité ;
(b) préparation d'un sol colloïdal à partir de ladite poudre mise en oeuvre à l'étape a),
(c) mise en oeuvre dudit sol colloïdal sous forme dudit film d'oxyde de métaux de transition sur un substrat de préférence préalablement dégraissé à l'aide d'une solution contenant un premier solvant alcoolique ou alcalin S1, ladite mise en oeuvre comprenant :
   (c') le dépôt d'une ou plusieurs couches dudit sol sur ledit substrat et
   (c") le recuit desdites une ou plusieurs couches formées à l'étape c') pour préparer ledit film d'oxyde de métaux de transition,
   caractérisé en ce que ledit sol colloïdal est préparé par :
   (b') la fourniture de ladite poudre AₐM_{b}O_{c} ayant une granulométrie désirée ;
   (b") la calcination de ladite poudre obtenue après l'étape b'),
   (b'") le mélange de ladite poudre obtenue après la calcination de l'étape b'") à un ou plusieurs second solvant S2 pour former ledit sol colloïdal ;
   ledit sol colloïdal ainsi formé consiste en un ou plusieurs oxydes de métaux et un solvant.

De préférence, le procédé concerne la fabrication de films minces d'oxyde de métaux de transition. Le terme « mince » tel qu'utilisé ici se rapporte à l'épaisseur moyenne dudit film d'oxyde de métaux de transition, ladite épaisseur moyenne étant inférieure à 250 µm. Le film peut être plat, en relief, en créneau ou en escalier.

De préférence, le présent procédé se rapporte à la fabrication de films d'oxyde de métaux de transition, avantageusement d'oxyde de métaux de transition lithié, c'est-à-dire comprenant du lithium.

Selon un second aspect, l'invention fournit un sol colloïdal obtenable par un procédé tel que décrit ci-dessus. Ledit sol colloïdal consistant en :
- un ou plusieurs oxydes de métaux de transition de formule AₐM_{b}O_{c} tels que définis ci-dessus,
- un solvant S2 tel que défini supra, et
- de manière optionnelle, un dopant Z sélectionné parmi les oxydes de métaux de transition des colonnes 3A, 3B, 4 et/ou 13 du tableau périodique ou un mélange de ces oxydes.
Le sol colloïdal de la présente invention ne contient de préférence pas d'autres substances carbonées que S2 et, optionnellement, S3.

Selon un autre aspect de l'invention, un film d'oxyde de métaux de transition préparé selon la présente invention peut être utilisé comme matériau d'électrode, de préférence comme matériau d'électrode dans une microbatterie avec une capacité d'insertion supérieure ou égale à 60% de la capacité d'insertion théorique réversible, avantageusement supérieure ou égale à 70%, de préférence supérieure ou égale à 80%.

### Brève description des figures

La figure 1 présente la courbe de distribution granulométrique de LiCoO₂ broyé et non broyé selon un mode de réalisation particulier de la présente invention.
La figure 2 représente deux diagrammes de diffraction des rayons X (DRX) respectivement d'une poudre et d'un film de LiCoO₂ préparé selon un mode de réalisation particulier de la présente invention.
La figure 3 représente la voltampérométrie cyclique d'un film de LiCoO₂ préparé selon un mode de réalisation particulier de l'invention illustrant l'évolution du courant en fonction du potentiel.
Les figures 4 et 5 représentent les capacités de charge et de décharge d'un film de LiCoO₂ préparé selon deux modes de réalisation particuliers de l'invention en fonction du nombre de cycles de charge et de décharge subi par l'électrode.

### Description détaillée de l'invention

Selon un premier aspect, l'invention fournit un procédé de dépôt de films d'oxyde de métaux de transition, de préférence par voie liquide. Ledit procédé comprend les étapes de :
a) fourniture d'une poudre d'oxyde de métaux de transition de formule AₐM_{b}O_{c},
b) préparation d'un sol colloïdal à partir de ladite poudre mise en oeuvre à l'étape a),
c) mise en oeuvre dudit sol colloïdal sous forme dudit film d'oxyde de métaux de transition sur un substrat propre et sec et donc de préférence préalablement dégraissé à l'aide d'une solution contenant un premier solvant alcoolique ou alcalin S1.

Ladite poudre d'oxyde de métaux de transition est de formule AₐM_{b}O_{c} dans laquelle
A est un métal alcalin, avantageusement A est choisi parmi le groupe consistant en Li, Na et K, ou leur mélange;
M est un métal ou un mélange de métaux choisi parmi les métaux de transition, les lanthanides ou les actinides, de préférence M est un métal ou un mélange de métaux de transition choisi parmi les éléments des colonnes 3 à 12 du tableau périodique, avantageusement M est choisi parmi le groupe consistant en Co, Ni, Mn, Fe, Cu, Ti, Cr, V et Zn, et leurs mélanges ;
O est l'oxygène,
a, b et c sont des nombres réels supérieurs à 0 ; a, b, c sont choisis de manière à assurer l'électroneutralité.

Ledit sol colloïdal est préparé par :
b') la fourniture de ladite poudre AₐM_{b}O_{c} ayant une granulométrie désirée, de préférence par broyage de ladite poudre d'oxyde de métaux de transition AₐM_{b}O_{c},
b") la calcination de ladite poudre obtenue après l'étape b'),
b'") le mélange de ladite poudre obtenue après la calcination de l'étape b") à un ou plusieurs second solvant S2 pour former ledit sol colloïdal.

La mise en oeuvre dudit sol colloïdal sous forme dudit film d'oxyde de métaux de transition sur un substrat (étape c) comprend
c') le dépôt d'une ou plusieurs couches dudit sol sur ledit substrat et
c") le recuit desdites une ou plusieurs couches formées à l'étape c') pour préparer ledit film d'oxyde de métaux de transition,

Ledit sol colloïdal formé à l'étape b) à b'") ne contient pas d'autres substances carbonées que des précurseurs d'oxydes ou le solvant s'il en contient, par exemple le solvant S2.

Selon un mode de réalisation préféré, le procédé comprend de plus une étape de dopage par dépôt d'un dopant Z à la surface de la poudre. De préférence, le dépôt du dopant Z se fait sous forme d'une suspension ou d'une solution du dopant Z dans un solvant S3. Le dépôt du dopant Z peut se faire avantageusement, soit directement sur la poudre à l'étape (a) ou de préférence, pendant l'étape (b) de formation du sol. Le dopant Z est de préférence sélectionné parmi les oxydes de métaux de transition des colonnes 3A, 3B, 4 et/ou 13 du tableau périodique, de préférence choisis parmi le groupe consistant en Al₂O₃, La₂O₃, ZrO₂, TiO₂, SiO₂, Li₇La₃Zr₂O₁₂, LaZrO, Li₂ZrO₃, La₂Zr₂O₇, ou un mélange de ces oxydes, pour former une poudre de formule AₐM_{b}O_{c} telle que définie à la revendication 1 dopée par le dopant Z Dans ce mode de réalisation, ledit sol colloïdal ne comprend pas d'autres substances carbonées que le solvant S2 et S3 ou les précurseurs du dopant.

La quantité de dopant Z est ajoutée de manière telle que la proportion de dopant Z dans le sol colloïdal est de 0 à 5 % en poids du sol colloïdal, avantageusement entre 0 et 3% en poids, de préférence entre 1 et 2 % en poids.

Une voie préférentielle d'introduction de l'agent dopant Z est la co-gélification : un sol d'un complexe organométallique d'un élément appartenant à la 3A, 3B, 4^{e} et / ou la 13^{ème} colonne du tableau périodique est ajouté à une suspension de la poudre d'oxyde de métaux de transition broyée et calcinée de formule AₐM_{b}O_{c} dans un solvant S3. L'ajout d'eau permet la fonctionnalisation de la surface de la poudre d'oxyde. La poudre dopée doit ensuite être séchée et maturée. Avantageusement, le séchage sera réalisé à la température d'évaporation du solvant S3. L'étape de maturation consiste en le maintien du solide dopé pendant 24h à 150°C et sous 20 mbar.

Avantageusement, le complexe organométallique employé est le tétra-isopropoxyde de titane (TiPT) et le solvant S3 est choisi indépendamment des solvants S1 et S2. Il peut également être identique à S1 et/ ou S2.

Les solvants , S2 et S3 sont sélectionnés indépendamment les uns des autres de préférence parmi le groupe consistant en l'eau et des solvants organiques présentant au moins une fonction alcool à chaîne linéaire ou branchée, saturée ou insaturée. Les solvants utilisés doivent être séléctionnés de sorte qu'ils ne réagissent pas chimiquement avec la poudre pour S2 et avec le dopant Z ou la poudre pour S3. Avantageusement, les solvants S2 et S3 sont sélectionnés indépendamment les uns des autres parmi le groupe consistant en l'eau et des alcools ayant une température d'ébullition inférieure à 150°C à pression atmosphérique. De préférence, les solvants S2 et S3 sont sélectionnés indépendamment les uns des autres parmi le groupe consistant en méthanol, éthanol, propan-1-ol, isopropanol, butanol,pentanol et methoxyéthanol. Le solvant S1 est choisi parmi le groupe consistant en l'eau, les liquides alcalins et des solvants organiques présentant au moins une fonction alcool à chaîne linéaire ou branchée, saturée ou insaturée. Avantageusement, le solvant S1 est sélectionné parmi le groupe consistant en l'eau, les liquides alcalins et des alcools ayant une température d'ébullition inférieure à 150°C à pression atmosphérique. De préférence, le solvant S1 est sélectionné parmi le groupe consistant en l'eau, les solutions alcalines, Gardoclean S5183, méthanol, éthanol, propan-1-ol, isopropanol, butanol, pentanol et methoxyéthanol

Lorsque plusieurs couches dudit sol sont formées sur un substrat, l'étape de recuit réalisée à l'étape c") peut être effectuée après le dépôt de chacune des couches dudit sol ou après le dépôt de plusieurs couches dudit sol.

Ladite étape de recuit (étape c") du présent procédé est réalisée à une température comprise entre 250°C et 500°C, en particulier entre 300°C et 450°C, et plus particulièrement entre 350°C et 400°C. L'étape de recuit peut être effectuée chaque fois qu'une couche dudit sol est déposée, i.e. chaque fois que l'étape c') est réalisée, ou après plusieurs dépôts successifs de couches. Lesdites une ou plusieurs couches sont maintenues à la température de recuit pendant une durée comprise entre 30 secondes et 2 heures, de préférence entre 5 minutes et 1 heure. L'étape c") de recuit permet l'évaporation du solvant et l'obtention du film d'oxyde de métaux recherché.

La poudre d'oxyde de métaux de transition de formule AₐM_{b}O_{c} telle que définie ci-dessus peut être choisie parmi le groupe consistant en LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiNi_{0.5}Mn_{1.5-z}Ti_{z}O₄ où z est un nombre entre 0 et 1,5, LiMn₂O₄, Li₄Mn₅O₁₂, LiNiO₂, Li₄Ti₅O₁₂. Avantageusement, la poudre d'oxyde de métaux de transition de formule AₐM_{b}O_{c} telle que définie ci-dessus peut être LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiMn₂O₄, Li₄Mn₅O₁₂, LiNiO₂, Li₄Ti₅O₁₂; de préférence LiCoO₂, LiMnO₂, LiMn₂O₄, Li₄Mn₅O₁₂, LiNiO₂ ou Li₄Ti₅O₁₂.

De préférence, le dépôt d'une ou plusieurs couches dudit sol sur un substrat est réalisé sur un substrat ayant une température apte à permettre l'évaporation dudit second solvant S2, avantageusement une température proche de la température d'ébullition dudit second solvant S2. Le terme « proche » tel qu'utilisé ici correspond à une gamme de température dont la limite inférieure est égale à 30°C en dessous de la température d'ébullition dudit solvant organique polaire et dont la limite supérieure est égale à 10°C au-dessus de la température d'ébullition dudit solvant organique polaire. Ainsi, le second solvant présent dans le sol est au moins partiellement évaporé avant le dépôt d'une autre couche dudit sol.

De préférence, ledit substrat est un substrat métallique. En particulier, ledit substrat peut être un substrat conducteur de l'électricité. Le substrat peut comprendre du carbone, du platine, de l'or, de l'inox, du platine sur SiO₂, de l'ITO (Indium Tin Oxide), du platine sur une tranche de silice (également dénommée silicon wafer) ou des alliages métalliques comprenant au moins deux des éléments choisis parmi le nickel, le chrome et le fer. Lesdits alliages métalliques peuvent également comprendre d'autres éléments choisis parmi le molybdène, le niobium, le cobalt, le manganèse, le cuivre, l'aluminium, le titane, le silicium, le carbone, le soufre, le phosphore ou le bore. A titre d'exemple, les alliages métalliques peuvent être Ni₆₁Cr₂₂Mo₉Fe₅, Ni₅₃Cr₁₉Fe₁₉Nb₅Mo₃, Ni₇₂Cr₁₆Fe₈, Ni₅₇Cr₂₂Co₁₂Mo₉, Ni_{32,5}Cr₂₁Fe ou Ni₇₄Cr₁₅Fe₇Ti_{2,5}Al_{0,7}Nb_{0,95}, ceux-ci peuvent en outre contenir des traces ou des faibles teneurs dans l'un des composés suivants : le molybdène, le niobium, le cobalt, le manganèse, le cuivre, l'aluminium, le titane, le silicium, le carbone, le soufre, le phosphore ou le bore. Par exemple, lesdits alliages métalliques peuvent être des alliages de type Inconel®.

Le dépôt dudit sol sur le substrat (étape c') peut être réalisé par spin coating (i.e. dépôt par centrifugation), dip coating (i.e. dépôt par trempage) ou spray coating (i.e. dépôt par aérosol) ou slide coating (i.e. dépôt par glissement) ou screen printing (i.e. dépôt par impression sérigraphique) ou inkjet printing (i.e. dépôt par impression jet-d'encre) ou roll coating (i.e. dépôt par enducteur à rouleau).

Selon un mode de réalisation préféré, les étapes b') et b'") sont réalisées dans des conditions de température et de pression ambiantes. L'étape c) peut être réalisée également sous atmosphère ambiante, c'est-à-dire sous une atmosphère ni contrôlée ni modifiée par rapport à l'air ambiant.

La surface dudit film préparé selon la présente invention peut posséder une rugosité faible, avantageusement inférieure à 2000 nm, de préférence inférieure à 1000 nm, en particulier inférieure à 500 nm. De préférence, ledit film d'oxyde de métaux de transition peut être déposé sur un substrat. Ainsi, lorsque ledit film d'oxyde de métaux de transition peut être déposé sur un substrat, la rugosité de la surface dudit film inclut la rugosité issue de la surface dudit substrat. Lorsque ledit film d'oxyde de métaux de transition est déposé sur un substrat, la surface dudit film préparé selon la présente invention peut posséder une rugosité faible, avantageusement inférieure à 2500 nm, de préférence inférieure à 1200 nm, en particulier inférieure à 520 nm. En particulier, le procédé selon l'invention permet d'assurer la formation dudit film d'oxyde de métaux de transition et son adhérence sur des substrats de faible rugosité, en particulier des substrats ayant une surface présentant une rugosité Ra inférieure à 500 nm.

Le film d'oxyde de métaux de transition selon la présente invention peut avoir une structure monocouche ou multicouches suivant le nombre de couches déposées à l'étape c'). Le film d'oxyde de métaux de transition ayant une structure multicouche peut être préparé en répétant l'étape c') du présent procédé. Chaque étape c') peut être suivie de la mise en oeuvre de l'étape c") de recuit de la couche formée à une température comprise entre 150°C et 500°C. Chaque couche de la structure multicouche peut être indépendante l'une de l'autre. Ainsi, chaque couche peut avoir la même constitution, c'est-à-dire être constituée du ou des mêmes oxydes de métaux de transition de formule AₐM_{b}O_{c} telle que décrite dans la présente invention. Par exemple, un film multicouche de métaux de transition tel que LiCoO₂ pourrait être formé par des dépôts successifs sur le substrat, c'est-à-dire en répétant une ou plusieurs fois l'étape c) jusqu'à l'obtention de la structure multicouche désirée.
Ledit sol préparé à l'étape b) peut également contenir des particules conductrices de l'électricité telles que des particules d'argent, d'or, d'indium, et de platine, des fibres de carbone, des nanoparticules de carbone ou des nanotubes de carbone.

Alternativement, un film de structure multicouche peut être formé par des dépôts successifs d'une ou plusieurs couches de sols différents et préparés à partir d'une poudre d'oxyde de métaux identique ou différent. Chaque sol peut être indépendamment préparé à partir d'une solution comprenant une poudre broyée et calcinée et un second solvant différent. Ledit film multicouche peut être préparé en répétant les étapes a) à c') jusqu'à l'obtention de la structure multicouche désirée. Par exemple, une première couche pourrait comprendre du LiCoO₂; des couches supplémentaires, déposées préalablement ou ultérieurement à cette première couche sur le substrat, pourraient indifféremment comprendre, par exemple, du LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiNi_{0.5}Mn_{1.5-z}Ti_{z}O₄ où z est un nombre entre 0 et 1,5, LiMn₂O₄, LiMnO₂, Li₄Mn₅O₁₂, LiNiO₂, Li₄Mn₅O₂ ou Li₄Ti₅O₁₂.

Le film d'oxyde de métaux de transition ayant une structure multicouche peut comprendre entre 2 et 200 couches, de préférence entre 2 et 100 couches. Chaque couche peut avoir une épaisseur comprise entre 0,01 et 2,5 µm indépendamment les unes des autres.

Le film d'oxyde de métaux de transition selon la présente invention peut avoir une épaisseur moyenne comprise entre 0,01 µm et 250 µm, de préférence entre 0,1 et 50 µm, de préférence entre 1 et 30, de préférence entre 0,5 et 10 µm.

Le procédé selon l'invention permet de déposer un film d'oxyde de métaux de transition tel que la capacité massique du matériau est d'au moins 60%, de la capacité spécifique réversible théorique de celui-ci, avantageusement supérieure à 70%, et en particulier supérieure à 80%. Dans le cas particulier d'un film de LiCoO₂, la capacité massique mesurée est supérieure à 90 mA.h/g, avantageusement supérieure à 100 mA.h/g; la capacité massique théorique est déterminée au premier cycle de décharge. De préférence, la capacité massique dudit film d'oxyde de métaux de transition après plus de 20 cycles de décharge est au moins supérieure à 70% de la capacité massique théorique mesurée à un régime de C/10. La capacité spécifique réversible théorique est communément admise comme étant la moitié de la quantité théorique d'ions qui peuvent être insérés ou extraits dans un gramme de matériau d'électrode. Dans le cas du LiCoO₂, la capacité spécifique réversible théorique est de 137 mAh/g.

De manière surprenante, il a été observé que la sélection granulométrique des particules d'oxyde de métaux de transition suivi par une calcination de la poudre ainsi obtenue ne conduit pas à la coalescence des particules et permet de préparer un sol stable dans un solvant sans agent chélatant. Ce sol présentant la particularité d'adhérer à un substrat sans agent liant. Ainsi le sol colloïdal ne contient pas d'autres substances carbonées que le solvant s'il en contient et les précurseurs de dopant. Le sol colloïdal est réputé stable car il a pu être conservé pendant 24 heures sans qu'aucune précipitation n'ait été observée. En outre, le solvant est choisi parmi l'eau et le groupe des solvants organiques présentant au moins une fonction alcool qui ont un point d'ébullition bas à pression atmosphérique, i.e. inférieur à 150°C, de préférence inférieur à 110°C. Avantageusement, le second solvant peut être choisi parmi le méthanol, éthanol, méthoxy-éthanol, propan-1-ol, isopropanol, butanol, pentanol et l'eau.

La proportion de poudre dans le sol colloïdal est comprise entre 2 et 100 g par litre de sol colloïdal, de préférence entre 2 et 50 g/l de sol colloïdal. Alternativement, la proportion de poudre dans le sol colloïdal est supérieure à 100 g par litre de sol colloïdal.

Le broyage de la poudre est réalisé dans un broyeur en phase solide. Le broyage est effectué de telle sorte (ajustement : durée / vitesse de broyage) que les particules après broyage présentent une d50 comprise entre 0,1 et 10 µm ; de préférence entre 0,1 et 5 µm et de manière préférentielle entre 0,5 et 1,5 µm. Dans le cas où la poudre AₐM_{b}O_{c} était disponible dans la granulométrie désirée, il est clair que l'étape de broyage peut être omise.

La durée et la température de la calcination sont ajustées dans le but d'obtenir les propriétés électrochimiques nécessaires aux applications envisagées. La calcination de la poudre est réalisée à une température comprise entre 350°C et 800°C selon l'oxyde de métaux de transition mis en oeuvre, de préférence entre 500 et 750°C. La durée de calcination est de 1 à 15 heures, de préférence 2 à 10 heures, de manière plus préférentielle de 3 à 5 heures.

La poudre d'oxyde de métaux de transition de formule AₐM_{b}O_{c} telle que définie ci-dessus peut être choisie parmi le groupe consistant en LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiNi_{0.5}Mn_{1.5-z}Ti_{z}O₄ où z est un nombre entre 0 et 1,5, LiMn₂O₄, Li₄Mn₅O₁₂, LiNiO₂, Li₄Ti₅O₁₂. Avantageusement, la poudre d'oxyde de métaux de transition de formule AₐM_{b}O_{c} telle que définie ci-dessus peut être LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiMn₂O₄, Li₄Mn₅O₁₂, LiNiO₂, Li₄Ti₅O₁₂; de préférence LiCoO₂, LiMnO₂, LiMn₂O₄, Li₄Mn₅O₁₂, LiNiO₂ ou Li₄Ti₅O₁₂.

Comme mentionné ci-dessus, le film d'oxyde de métaux de transition tel que décrit dans la présente invention peut être utilisé comme matériau d'électrode, de préférence comme matériau d'une électrode positive. Ladite électrode peut ainsi être utilisée dans une microbatterie. De préférence, le film d'oxyde de métaux de transition selon la présente invention utilisé comme matériau d'électrode est obtenu par les étapes a) à c) ou a) à c") du procédé selon la présente invention. Le film d'oxyde de métaux de transition tel que décrit dans la présente invention peut être utilisé dans une pile à combustible. Le film d'oxyde de métaux de transition selon la présente invention peut être utilisé comme matériau de protection de matériau d'électrode, de préférence dans des piles à combustibles. Ainsi, ledit film d'oxyde de métaux de transition peut être déposé sur tout ou partie de la surface d'une anode ou d'une cathode.

Selon un deuxième aspect de l'invention, un sol colloïdal obtenable par un procédé tel que discuté supra est fourni. Ledit sol consiste en :
- un ou plusieurs oxydes de métaux de transition de formule AₐM_{b}O_{c} dopés ou non, tels que définis précédemment,
- un solvant S2 tel que défini précédemment, et de préférence choisi parmi l'eau et les solvants organiques présentant une fonction alcool qui ont un point d'ébullition bas à pression atmosphérique, i.e. inférieur à 150°C, de préférence inférieur à 110°C. Avantageusement, le second solvant S2 peut être choisi parmi le méthanol, éthanol, méthoxy-éthanol, propan-1-ol, isopropanol, butanol, pentanol et l'eau, et
- de manière optionnelle, un dopant Z sélectionné parmi les oxydes de métaux de transition des colonnes 3A, 3B, 4 et/ou 13 du tableau périodique ou un mélange de ces oxydes, avec ou sans un solvant S3 tel que discuté précédemment. Le solvant S3 peut être absent dans le cas où il n'aurait pas été utilisé pour le dépôt du dopant, dans le cas où il aurait été utilisé mais aurait évaporé ou que S3 est le même solvant que S2 et ne peut donc pas être distinguer de ce dernier.

La poudre d'oxyde de métaux de transition de formule AₐM_{b}O_{c} telle que définie ci-dessus peut être choisi parmi le groupe consistant en LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiNi_{0.5}Mn_{1.5-z}Ti_{z}O₄ où z est un nombre entre 0 et 1,5, LiMn₂O₄, Li₄Mn₅O₁₂, LiNiO₂, Li₄Ti₅O₁₂. Avantageusement, la poudre d'oxyde de métaux de transition de formule AₐM_{b}O_{c} telle que définie ci-dessus peut être LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiMn₂O₄, Li₄Mn₅O₁₂, LiNiO₂, Li₄Ti₅O₁₂; de préférence LiCoO₂, LiMnO₂, LiMn₂O₄, Li₄Mn₅O₁₂, LiNiO₂ ou Li₄Ti₅O₁₂.

Le sol est stable, il permet d'être conservé à température ambiante pendant au moins 24 heures.

Le sol présente avantageusement une concentration en oxyde de métaux de transition comprise entre 1 et 100 g par litre de sol, de préférence entre 2 et 50 g par litre de sol, de préférence entre 3 et 10 g par litre de sol.

Alternativement, le sol présente avantageusement une concentration en oxyde de métaux de transition supérieure à 100 g par litre de sol.

Le sol peut contenir un ou plusieurs oxydes de métaux de transition et un ou plusieurs dopants Z du type oxyde d'éléments appartenant aux colonnes 3A, 3B, 4 et/ou 13 du tableau périodique et le solvant S2 et le solvant S3.

### Exemples

### Protocole général pour la détermination des caractéristiques des films déposés selon la présente invention.

### Procédure pour déterminer la rugosité

La rugosité Ra des surfaces correspond à la moyenne arithmétique des valeurs absolues des écarts entre le profil et une ligne moyenne de ce profil, elle est exprimée en microns. Elle a été mesurée au moyen d'un profilomètre par contact de marque Dektak (fournisseur Bruker) dont le stylet présente un rayon de courbure de 12,5 microns.

### Procédure pour déterminer l'adhérence.

L'adhérence est mesurée après la mise en oeuvre dudit sol sous forme dudit film d'oxyde de métaux de transition. Ainsi, l'adhérence peut être mesurée après la mise en oeuvre de l'étape c') de dépôt d'une ou plusieurs couches, de préférence après ledit traitement thermique ; après la mise en oeuvre de l'étape c") de recuit dudit film d'oxyde de métaux de transition. La mesure de l'adhérence est effectuée tout d'abord par simple inclinaison du substrat une fois recouvert par une ou plusieurs couches dudit sol (étape c'). Lesdites une ou plusieurs couches déposées sont considérées comme adhérant au substrat si elles ne se détériorent pas sous l'effet de l'inclinaison. Un test de frottement est alors effectué et consiste à passer le doigt ou un chiffon sec sur le substrat recouvert dudit film d'oxyde de métaux de transition, i.e. après recuit (étape c"). Une inspection visuelle du substrat revêtu permet d'évaluer la mesure de l'adhérence du revêtement. Un revêtement étant défini comme adhérant au substrat lorsqu'au moins une couche dudit film d'oxyde de métaux de transition restait sur le substrat.

Procédure pour déterminer les performances électrochimiques des matériaux.

Les performances électrochimiques des matériaux sont évaluées par des mesures de cyclage en mode galvanostatique avec limitation de potentiel. La capacité massique du matériau est évaluée en intégrant le courant traversant le matériau durant chaque cycle de charge (ou de décharge) rapporté à la masse déposée.

### Procédure pour déterminer la pureté des matériaux

La pureté des matériaux peut être évaluée par diffraction des rayons X (DRX) et par voltampérométrie cyclique où le courant est mesuré en fonction d'incréments de potentiel.

### Protocole général pour la préparation d'un substrat et la préparation d'un oxyde de métaux de transition broyé et calciné selon la présente invention.

### Procédure de préparation des poudres : broyage et calcination

L'oxyde de cobalt et de lithium commercial (LiCoO₂) a été acheté chez Sigma-Aldrich (n°CAS : 12190-3). 6.0 g de LiCoO₂ ont été broyés dans un broyeur planétaire à billes (Mono-broyeur planétaire PULVERISETTE 6 *classic line*) à 650 tours par minute (rpm) pendant 60 cycles. Caractéristiques du broyeur : 20 billes de 15 mm de diamètre sont utilisées (agate, SiO₂) dans un mortier en agate de 80 mL. Pendant chaque cycle le broyeur tourne pendant 5 minutes et fait une pause de 10 minutes. Nom de l'échantillon : LiCo-65

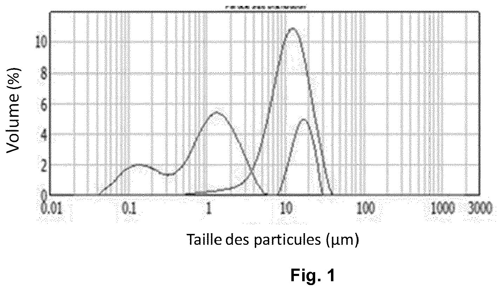

La figure 1 montre le changement de répartition granulométrique suite au broyage de l'échantillon LiCo-65 : On peut observer une forte diminution du pourcentage de volume (de 11% à 5%) en particules dont la taille est comprise entre 10 et 11 µm, cet effet est accompagné d'une augmentation du pourcentage de volume (de 0.5% à 5.0 %) en particules autour 1.0 µm. On peut également observer l'apparition de nanoparticules de LiCoO2 autour de 100 nm avec un pourcentage de volume de 2 %.

Le LiCoO₂-broyé (LiCo-65) a ensuite été calciné à 700°C pendant 2,5h (20°C/min). Nom de l'échantillon : LiCo-65/700

### Préparation du substrat

Une solution dégraissante a été préparée en mélangeant 15 g de produit S5183 (Gardoclean de Chemetal) dans 1L d'eau deionisée. 8 disques d'Inox ont été lentement submergés dans cette solution dégraissante pendant quelques secondes et enfin lentement sortie de la solution. Ces deux étapes ont été répétées 10 fois pour chaque disque. Ensuite, les disques ont été lavés avec de l'eau déionisée. Les disques ont ensuite été séchés à 120°C pendant 1 h.

### Procédure générale pour le dépôt des couches minces

L'immobilisation de LiCoO₂ a été effectuée sur des disques en INOX (diamètre =15,5 mm). Avant leur utilisation, les disques ont été dégraissés, lavés et séchés. Le dépôt en couche minces de LiCoO₂ a été effectuée spray-coating. Les 8 disques d'Inox prétraités sont placés sur le support au centre du dispositif de spray coating qui a été préchauffé à 105°C.

### Exemple 1 : Préparation d'un film de LiCoO₂ selon l'invention

0.5 g de LiCoO₂-broyé et calciné (LiCo-65/700) ont été mis en suspension et dispersés dans 100 mL d'eau désionisée par ultrasons. Après une durée d'ultrasonication de 16 heures, on observe la formation d'une phase colloïdale. Le colloïde a été séparé du solide en excès, après une décantation de 4h. Nom du colloïde : LiCo-65/700 colloïde
Le sol colloïdal obtenu a été déposé spray coating selon le protocole spécifié plus haut. 50 mL du colloïde (LiCo-65/700 colloide) ont pu être déposés sur le substrat préalablement chauffé à 105°C. Nom des échantillons : LiCo-65/700 Inox. Les échantillons LiCo-65/700 Inox ont ensuite été recuitsà 350°C pendant 1 h (20°C/min). Une quantité de 1,10 mg de LiCo-65/700 a pu être déposée sur chacun des 8 disques d'inox. Nom des échantillons : LiCo-65/700 Inox/35.

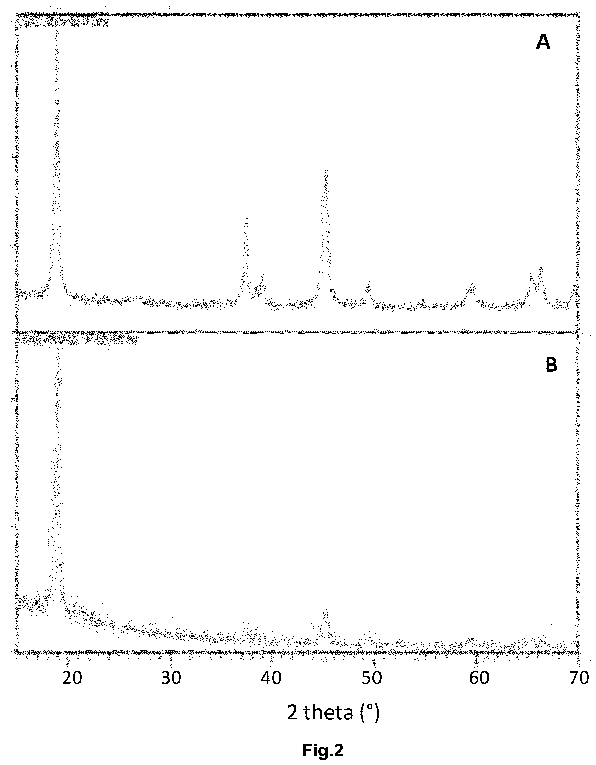

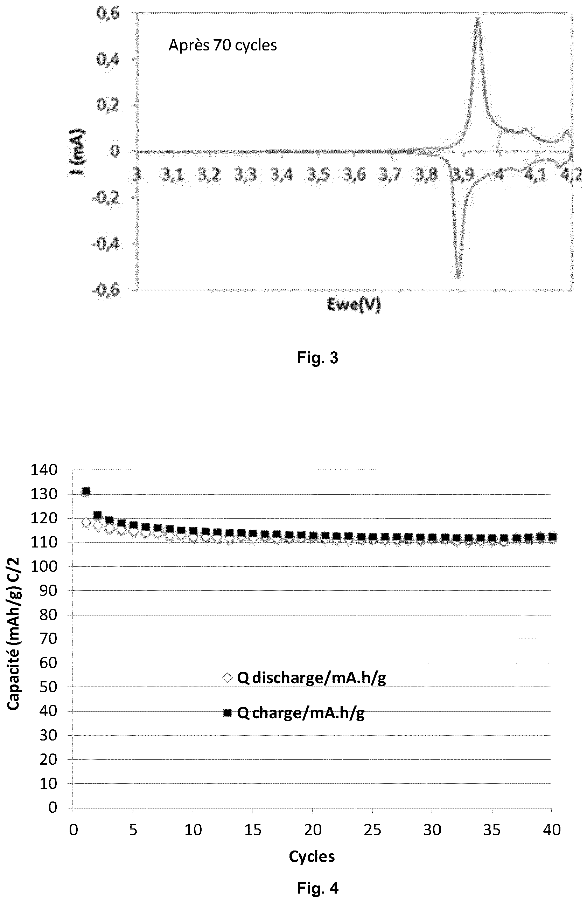

La figure 2 compare les profils de DRX des échantillons de LiCoO₂ (Figure 2, A) sous forme de poudre et de couche mince (LiCo-65/700 Inox/35 ; figure 2, B). De grandes similitudes entre les profils de diffraction ont pu être observées. Les mêmes pics caractéristiques du LiCoO₂- haute température autour de 19, 37.5, 38.5, 45, 49.5, 59.5, 65.5 et 66.5 (2-theta) ont été obtenus. Le pourcentage de LiCoO₂-haute température a été déterminé à partir de la voltamétrie cyclique (CV) et reporté dans la figure 3. La stabilité électrochimique et la bonne cyclabilité du matériau sont démontrées par la figure 4, dans laquelle on observe la capacité massique de charge et de décharge du même matériel en régime C/2 pendant 30 cycles. Avec une capacité massique initiale de l'ordre de 120 mAh/g (88 % de la capacité théorique d'insertion), et une perte de la capacité de décharge initiale de seulement 4 % au bout de dix cycles.

### Exemple 2 (invention) dépôt de LiCoO₂ dopé au TiO₂

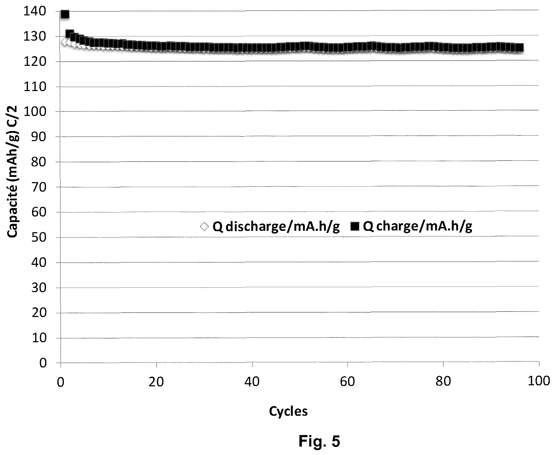

Une solution de « dopant » a été réalisée en mélangeant 7.7 mL d'isopropoxide de titane (TiPT, SigmaAldrich n°CAS : 546-68-9) dans 41.7 mL de 2-méthoxy-éthanol pur. Une solution de dilution a été réalisée en mélangeant 1.03 mL d'eau déionisée dans 41.25 mL de 2-méthoxy-éthanol pur. 3.32 g de l'échantillon LiCo-65/700 ont été mis en suspension et dispersés dans 400 mL de 2-méthoxy-éthanol par agitation à 50°C (1 heure). A cette suspension, 0.66 mL de la solution de « dopant » ont été ajoutés (suspension Sp1). Apres 1h d'agitation (à 50°C), à la suspension Sp1, 0.66 mL de la solution de dilution ont été ajoutés (suspension Sp2). Apres 24h d'agitation (à 50°C), la suspension Sp2 a été rota-évaporée à 40°C (30 mbar). Le solide résultant a été séché à 150°C (20 mbar) pendant 24h. Nom de l'échantillon : LiCo-65/700/TiO₂.
0.5 g de LiCo-65/700/TiO2 ont été mis en suspension et dispersés dans 100 mL d'eau déionisée et mélangés sous ultrasons. Après 16h, on observe la formation d'une phase colloïdale. Le sol colloïdal a été séparé du solide en excès, après une mise en décantation de 4h. Nom du colloïde : LiCo-65/700/TiO2 colloïde.
Les 8 disques d'Inox prétraités sont placés sur le support au centre du dispositif de spray coating qui a été préchauffé à 105°C. 50 mL du colloïde (LiCo-65/700/TiO2 colloide) ont pu être déposés sur le substrat préchauffé à 105°C. Nom des échantillons : LiCo-65/700/TiO2 Inox.
Les 8 échantillons LiCo-65/700/TiO2 Inox ont été recuits à 350°C pendant 1 h (20°C/min) et une quantité de 1.10 mg de LiC0-65/700/TiO2 a pu être déposée sur chacun des disques. Nom des échantillons : LiCo-65/700/TiO2 Inox/35.
La capacité massique de charge et de décharge est présentée à la figure 5. Avec une capacité massique initiale de 128.12 mAh/g, et une perte de la capacité de décharge initiale de 1.4 % au bout de dix cycles. Le système se stabilise et perd seulement 1.83 % de la capacité de décharge initiale au bout de 100 cycles. Après 100 cycles, la capacité d'insertion théorique est encore de plus de 85 %.

**Tableau 1 Données relatives à la formation d'un film d'oxyde de métaux de transition et son adhérence sur un substrat**

| Echantillons | LiCoO₂ colloide g/L | Poids déposé mg | Rugosité (nm) | Temp chauffe (étape b") (°C) | % LiCoO₂ HT | adhérence |
|---|---|---|---|---|---|---|
| Exemple 1 | 2.20 | 1.1 | 2600 | 350 | 95.2 | oui |
| Exemple 2 | 2.40 | 2.22 | 2600 | 350 | 99.3 | oui |

Le tableau 1 résume les principales caractéristiques des films obtenus après application du procédé selon l'invention.

## Revendications

1. Procédé de fabrication d'un film d'oxyde de métaux transition comprenant les étapes de :
(a) fourniture d'une poudre de formule AₐM_{b}O_{c} dans laquelle
A est un métal alcalin, avantageusement A est choisi parmi le groupe consistant en Li, Na et K, ou leur mélange;
M est un métal ou un mélange de métaux choisi parmi les métaux de transition, les lanthanides ou les actinides, de préférence M est un métal ou un mélange de métaux de transition choisi parmi les éléments des colonnes 3 à 12 du tableau périodique, avantageusement M est choisi parmi le groupe consistant en Co, Ni, Mn, Fe, Cu, Ti, Cr, V et Zn, et leurs mélanges ;
O est l'oxygène,
a, b et c sont des nombres réels supérieurs à 0 ; a, b, c sont choisis de manière à assurer l'électroneutralité ;
(b) préparation d'un sol colloïdal à partir de ladite poudre mise en oeuvre à l'étape (a),
(c) mise en oeuvre dudit sol colloïdal sous forme dudit film d'oxyde de métaux de transition sur un substrat qui a été de préférence préalablement dégraissé à l'aide d'une solution contenant un premier solvant alcoolique ou alcalin S1, ladite mise en oeuvre comprenant :
(c') le dépôt d'une ou plusieurs couches dudit sol sur ledit substrat et
(c") le recuit desdites une ou plusieurs couches formées à l'étape (c') pour préparer ledit film d'oxyde de métaux de transition,
**caractérisé en ce que** ledit sol colloïdal est préparé par :
(b') la fourniture de ladite poudre AₐM_{b}O_{c} ayant une granulométrie désirée ;
(b") la calcination de ladite poudre AₐM_{b}O_{c} de l'étape (b'),
(b"') le mélange de ladite poudre obtenue après la calcination de l'étape (b") à un second solvant S2 pour former ledit sol colloïdal ;
ledit sol colloïdal ainsi formé consiste en un ou plusieurs oxydes de métaux calcinés et un ou plusieurs solvants.

2. Procédé selon la revendication 1, **caractérisé en ce que** l'étape (b') de fourniture de la poudre de granulométrie désirée comprend le broyage de ladite poudre d'oxyde AₐM_{b}O_{c}.

3. Procédé selon la revendication 1 ou 2, comprenant de plus une étape de dopage par dépôt d'un dopant Z à la surface de la poudre, de préférence sous forme d'une suspension ou solution du dopant Z dans un solvant S3, dans lequel le dopant Z est de préférence sélectionné parmi les oxydes de métaux de transition des colonnes 3A, 3B, 4 et/ou 13 du tableau périodique, de préférence choisis parmi le groupe consistant en Al₂O₃, La₂O₃, ZrO₂, TiO₂, SiO₂, Li₇La₃Zr₂O₁₂, LaZrO, Li₂ZrO₃, La₂Zr₂O₇, ou un mélange de ces oxydes, pour former une poudre de formule AₐM_{b}O_{c} telle que définie à la revendication 1(a) dopée par le dopant Z.

4. Procédé selon la revendication 3 **caractérisé en ce que** la proportion du dopant Z dans le sol colloïdal est de 0 à 5 % en poids du sol colloïdal.

5. Procédé selon l'une quelconque des revendications précédentes **caractérisé en ce que** S2 est sélectionné parmi le groupe consistant en :
• l'eau et
• des solvants organiques présentant au moins une fonction alcool à chaîne linéaire ou branchée, saturée ou insaturée et ayant de préférence une température d'ébullition inférieure à 150°C à pression atmosphérique, de préférence sélectionnés parmi le méthanol, l'éthanol, le propan-1-ol, l'isopropanol, le butanol, le pentanol et le methoxyéthanol.

6. Procédé selon l'une quelconque des revendications précédentes **caractérisé en ce que** les particules de la poudre avant l'étape de calcination (b") présentent une d50 comprise entre 0,1 et 10 µm.

7. Procédé selon l'une quelconque des revendications précédentes **caractérisé en ce que** ladite étape de recuit (c") du présent procédé est réalisée à une température comprise entre 250°C et 500°C ; et avantageusement pendant une durée comprise entre 30 secondes et 2 heures.

8. Procédé selon l'une quelconque des revendications précédentes **caractérisé en ce que** la poudre d'oxyde de métaux de transition de formule AₐM_{b}O_{c} telle que définie à la revendication 1(a) est choisie parmi le groupe consistant en LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiNi_{0.5}Mn_{1.5-z}Ti_{z}O₄ où z est un nombre entre 0 et 1,5, LiMn₂O₄, Li₄Mn₅O₁₂, LiNiO₂, Li₄Ti₅O₁₂, la poudre d'oxyde de métaux de transition étant de préférence de formule AₐM_{b}O_{c} est LiCoO₂, LiMnO₂, LiMn₂O₄, Li₄Mn₅O₁₂, LiNiO₂ ou Li₄ Ti₅O₁₂.

9. Procédé selon l'une quelconque des revendications précédentes **caractérisé en ce que** le substrat utilisé à l'étape (c') est porté à une température comprise entre 30°C en dessous de la température d'ébullition du solvant S2 et 10°C au-dessus de la température d'ébullition du solvant S2.

10. Procédé selon l'une quelconque des revendications précédentes **caractérisé en ce que** l'étape (b") est réalisée à une température comprise entre 350°C et 800°C pour une durée de calcination comprise entre 1 et 15 heures.

11. Sol colloïdal obtenable par un procédé selon l'une quelconque des revendications précédentes, ledit sol colloïdal consistant en :
• un ou plusieurs oxydes de métaux de transition de formule AₐM_{b}O_{c} tels que définis à la revendication 1(a),
• un solvant S2 tel que défini à la revendication 5, et
• de manière optionnelle, un dopant Z sélectionné parmi les oxydes de métaux de transition des colonnes 3A, 3B, 4 et/ou 13 du tableau périodique ou un mélange de ces oxydes, avec ou sans un solvant S3.
Ledit sol colloïdal est préparé par:
(b') la fourniture de ladite poudre AₐM_{b}O_{c} ayant une granulométrie désirée;
(b") la calcination de ladite poudre AₐM_{b}O_{c} de l'étape (b'),
(b'") le mélange de ladite poudre obtenue après la calcination de l'étape (b") à un second solvant S2 pour former ledit sol colloïdal.

12. Sol colloïdal selon la revendication 11 **caractérisé en ce que** le solvant S2 est choisi parmi l'eau et les solvants organiques présentant au moins une fonction alcool à chaîne linéaire ou branchée, saturée ou insaturée, lesdits solvants organiques ayant de préférence un point d'ébullition inférieur à 150°C à pression atmosphérique, de préférence inférieur à 110°C.

13. Sol colloïdal selon la revendication 11 ou 12 **caractérisé en ce que** l'oxyde de métaux de transition de formule AₐM_{b}O_{c} est choisi parmi le groupe consistant en LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiNi_{0.5}Mn_{1.5-z}Ti_{z}O₄ où z est un nombre entre 0 et 1,5, LiMn₂O₄, Li₄Mn₅O₁₂, LiNiO₂, Li₄Ti₅O₁₂; de préférence parmi le groupe consistant en LiCoO₂, LiMnO₂, LiMn₂O₄, Li₄Mn₅O₁₂, LiNiO₂ ou Li₄Ti₅O₁₂.

14. Sol colloïdal selon l'une quelconque des revendications 11 à 13 comprenant un dopant Z et un solvant S3, Z étant tel que défini dans la revendication 3 et le solvant S3 étant de préférence sélectionné parmi le groupe consistant en :
• l'eau et
• des solvants organiques présentant au moins une fonction alcool à chaîne linéaire ou branchée, saturée ou insaturée et ayant de préférence une température d'ébullition inférieure à 150°C à pression atmosphérique, de préférence sélectionnés parmi le méthanol, l'éthanol, le propan-1-ol, l'isopropanol, le butanol, le pentanol et le methoxyéthanol.

15. Sol colloïdal selon l'une quelconque des revendications 11 à 14 **caractérisé en ce que** la proportion du dopant Z dans le sol colloïdal est de 0 à 5 % en poids du sol colloïdal.

## Patentansprüche

1. Verfahren zur Herstellung eines Übergangsmetalloxidfilms, das folgende Schritte umfasst:
(a) Bereitstellen eines Pulvers der Formel AₐM_{b}O_{c}, in der:
A für ein Alkalimetall, wobei A vorteilhafterweise aus der Gruppe bestehend aus Li, Na und K ausgewählt ist, oder eine Mischung davon steht;
M für ein Metall oder eine Mischung von Metallen, die aus Übergangsmetallen, Lanthaniden oder Actiniden ausgewählt sind, steht, wobei M vorzugsweise für ein Übergangsmetall oder eine Mischung von Übergangsmetallen, die aus den Elementen der Gruppen 3 bis 12 des Periodensystems ausgewählt sind, steht, wobei M vorteilhafterweise aus der Gruppe bestehend aus Co, Ni, Mn, Fe, Cu, Ti, Cr, V und Zn und Mischungen davon ausgewählt ist;
O für Sauerstoff steht,
a, b und c für reelle Zahlen größer 0 stehen;
a, b und c so gewählt sind, dass die Elektroneutralität gewährleistet ist;
(b) Herstellen eines kolloidalen Sols aus dem in Schritt (a) verarbeiteten Pulver;
(c) Verarbeiten des kolloidalen Sols in Form des Übergangsmetalloxidfilms auf einem Substrat, das vorzugsweise vorher mit einer Lösung, die ein erstes alkoholisches oder alkalisches Lösungsmittel S1 enthält, entfettet wurde, wobei die Verarbeitung Folgendes umfasst:
(c') das Abscheiden einer oder mehrerer Schichten des Sols auf dem Substrat und
(c") das Tempern der in Schritt (c') gebildeten Schicht bzw. Schichten zur Herstellung des Übergangsmetalloxidfilms,
**dadurch gekennzeichnet, dass** das kolloidale Sol hergestellt wird durch:
(b') Bereitstellen des AₐM_{b}O_{c}-Pulvers mit einer gewünschten Teilchengröße;
(b") Calcinieren des AₐM_{b}O_{c}-Pulvers aus Schritt (b');
(b''') Mischen des nach dem Calcinieren von Schritt (b") erhaltenen Pulvers mit einem zweiten Lösungsmittel S2 zur Bildung des kolloidalen Sols;
wobei das so gebildete kolloidale Sol aus einem oder mehreren calcinierten Metalloxiden und einem oder mehreren Lösungsmitteln besteht.

2. Verfahren nach Anspruch 1, **dadurch gekennzeichnet, dass** der Schritt (b') des Bereitstellens des Pulvers mit gewünschter Teilchengröße das Mahlen des AₐM_{b}O_{c}-Oxidpulvers umfasst.

3. Verfahren nach Anspruch 1 oder 2, außerdem umfassend einen Schritt des Dotierens durch Abscheidung eines Dotierstoffs Z auf der Oberfläche des Pulvers, vorzugsweise in Form einer Suspension oder Lösung des Dotierstoffs Z in einem Lösungsmittel S3, wobei der Dotierstoff Z vorzugsweise aus den Oxiden von Übergangsmetallen der Gruppen 3A, 3B, 4 und/oder 13 des Periodensystems ausgewählt wird und vorzugsweise aus der Gruppe bestehend aus Al₂O₃, La₂O₃, ZrO₂, TiO₂, SiO₂, Li₇La₃Zr₂O₁₂, LaZrO, Li₂ZrO₃ und La₂Zr₂O₇ oder einer Mischung dieser Oxide ausgewählt wird, zur Bildung eines mit dem Dotierstoff Z dotierten Pulvers der Formel AₐM_{b}O_{c} gemäß Anspruch 1(a).

4. Verfahren nach Anspruch 3, **dadurch gekennzeichnet, dass** der Anteil des Dotierstoffs Z in dem kolloidalen Sol 0 bis 5 Gew.-% des kolloidalen Sols beträgt.

5. Verfahren nach einem der vorhergehenden Ansprüche, **dadurch gekennzeichnet, dass** S2 aus der Gruppe bestehend aus
• Wasser und
• organischen Lösungsmitteln mit mindestens einer Alkoholfunktion und gesättigter oder ungesättigter, linearer oder verzweigter Kette und vorzugsweise mit einem Siedepunkt von weniger als 150 °C bei Normaldruck, vorzugsweise ausgewählt aus Methanol, Ethanol, Propan-1-ol, Isopropanol, Butanol, Pentanol und Methoxyethanol,
ausgewählt wird.

6. Verfahren nach einem der vorhergehenden Ansprüche, **dadurch gekennzeichnet, dass** die Pulverteilchen vor dem Calcinierungsschritt (b") einen d50-Wert zwischen 0,1 und 10 µm aufweisen.

7. Verfahren nach einem der vorhergehenden Ansprüche, **dadurch gekennzeichnet, dass** der Temperschritt (c") des vorliegenden Verfahrens bei einer Temperatur zwischen 250 °C und 500 °C und vorteilhafterweise während einer Dauer zwischen 30 Sekunden und 2 Stunden durchgeführt wird.

8. Verfahren nach einem der vorhergehenden Ansprüche, **dadurch gekennzeichnet, dass** das Oxidpulver von Übergangsmetalloxid der Formel AₐM_{b}O_{c} gemäß Anspruch 1(a) aus der Gruppe bestehend aus LiCoO₂, LiMnO₂, LiNi_{0,5}Mn_{1,5}O₄, LiCr_{0,5}Mn_{1,5}O₄, LiCo_{0,5}Mn_{1,5}O₄, LiCoMnO₄, LiNi_{0,5}Mn_{0,5}O₂, LiNi_{1/3}Mn_{1/3}Co_{1/3}O₂, LiNi_{0,8}Co_{0,2}O₂, LiNi_{0,5}Mn_{1,5-z}Ti_{z}O₄, wobei z für eine Zahl zwischen 0 und 1,5 steht, LiMn₂O₄, Li₄Mn₅O₁₂, LiNiO₂ und Li₄Ti₅O₁₂, ausgewählt wird, wobei das Oxidpulver von Übergangsmetalloxid vorzugsweise die Formel AₐM_{b}O_{c} aufweist LiCoO₂, LiMnO₂, LiMn₂O₄, Li₄Mn₅O₁₂, LiNiO₂ oder Li₄Ti₅O₁₂ ist.

9. Verfahren nach einem der vorhergehenden Ansprüche, **dadurch gekennzeichnet, dass** das in Schritt (c') verwendete Substrat auf eine Temperatur zwischen 30 °C unter dem Siedepunkt des Lösungsmittels S2 und 10 °C über dem Siedepunkt des Lösungsmittels S2 gebracht wird.

10. Verfahren nach einem der vorhergehenden Ansprüche, **dadurch gekennzeichnet, dass** der Schritt (b") bei einer Temperatur zwischen 350 °C und 800 °C für eine Calcinierungsdauer zwischen 1 und 15 Stunden durchgeführt wird.

11. Kolloidales Sol, das durch ein Verfahren nach einem der vorhergehenden Ansprüche erhältlich ist, wobei das Sol aus:
• einem oder mehreren Übergangsmetalloxiden der Formel AₐM_{b}O_{c} gemäß Anspruch 1(a),
• einem Lösungsmittel S2 gemäß Anspruch 5 und
• gegebenenfalls einem Dotierstoff Z, der aus Übergangsmetalloxiden der Gruppen 3A, 3B, 4 und/oder 13 des Periodensystems oder einer Mischung dieser Oxide ausgewählt ist, mit oder ohne ein Lösungsmittel S3
besteht.
Das kolloidale Sol wird hergestellt durch:
(b') Bereitstellen des AₐM_{b}O_{c}-Pulvers mit einer gewünschten Teilchengröße;
(b") Calcinieren des AₐM_{b}O_{c}-Pulvers aus Schritt (b') ;
(b''') Mischen des nach dem Calcinieren von Schritt (b") erhaltenen Pulvers mit einem zweiten Lösungsmittel S2 zur Bildung des kolloidalen Sols.

12. Kolloidales Sol nach Anspruch 11, **dadurch gekennzeichnet, dass** das Lösungsmittel S2 aus Wasser und organischen Lösungsmitteln mit mindestens einer Alkoholfunktion und gesättigter oder ungesättigter, linearer oder verzweigter Kette und vorzugsweise mit einem Siedepunkt von weniger als 150 °C bei Normaldruck, vorzugsweise weniger als 110 °C, ausgewählt ist.

13. Kolloidales Sol nach Anspruch 11 oder 12, **dadurch gekennzeichnet, dass** das Übergangsmetalloxid der Formel AₐM_{b}O_{c} aus der Gruppe bestehend aus LiCoO₂, LiMnO₂, LiNi_{0,5}Mn_{1,5}O₄, LiCr_{0,5}Mn_{1,5}O₄, LiCo_{0,5}Mn_{1,5}O₄, LiCoMnO₄, LiNi_{0,5}Mn_{0,5}O₂, LiNi_{1/3}Mn_{1/3}Co_{1/3}O₂, LiNi_{0,8}Co_{0,2}O₂, LiNi_{0,5}Mn_{1,5-z}Ti_{z}O₄, wobei z für eine Zahl zwischen 0 und 1,5 steht, LiMn₂O₄, Li₄Mn₅O₁₂, LiNiO₂ und Li₄Ti₅O₁₂, vorzugsweise aus der Gruppe bestehend aus LiCoO₂, LiMnO₂, LiMn₂O₄, Li₄Mn₅O₁₂, LiNiO₂ oder Li₄Ti₅O₁₂, ausgewählt ist.

14. Kolloidales Sol nach einem der Ansprüche 11 bis 13, das einen Dotierstoff Z und ein Lösungsmittel S3 umfasst, wobei Z wie in Anspruch 3 definiert ist und das Lösungsmittel S3 vorzugsweise aus der Gruppe bestehend aus
• Wasser und
• organischen Lösungsmitteln mit mindestens einer Alkoholfunktion und gesättigter oder ungesättigter, linearer oder verzweigter Kette und vorzugsweise mit einem Siedepunkt von weniger als 150 °C bei Normaldruck, vorzugsweise ausgewählt aus Methanol, Ethanol, Propan-1-ol, Isopropanol, Butanol, Pentanol und Methoxyethanol,
ausgewählt ist.

15. Kolloidales Sol nach einem der Ansprüche 11 bis 14, **dadurch gekennzeichnet, dass** der Anteil des Dotierstoffs Z in dem kolloidalen Sol 0 bis 5 Gew.-% des kolloidalen Sols beträgt.

## Claims

1. Process for the manufacture of a film of oxide of transition metals, comprising the stages of:
(a) providing a powder of formula AₐM_{b}O_{c}, in which:
A is an alkali metal; advantageously, A is chosen from the group consisting of Li, Na and K, or their mixture;
M is a metal or a mixture of metals chosen from transition metals, lanthanides or actinides; preferably, M is a transition metal or a mixture of transition metals chosen from the elements of Groups 3 to 12 of the Periodic Table; advantageously, M is chosen from the group consisting of Co, Ni, Mn, Fe, Cu, Ti, Cr, V and Zn, and their mixtures;
O is oxygen,
a, b and c are real numbers greater than 0; a, b and c are chosen so as to provide electrical neutrality;
(b) preparing a colloidal sol from the said powder processed in stage (a),
(c) processing the said colloidal sol in the form of the said film of oxide of transition metals on a substrate which has preferably been degreased beforehand using a solution containing a first alcoholic or alkaline solvent S1, the said processing comprising:
(c') the deposition of one or more layers of the said sol on the said substrate and
(c") the annealing of the said one or more layers formed in stage (c') in order to prepare the said film of oxide of transition metals,
**characterized in that** the said colloidal sol is prepared by:
(b') providing the said powder AₐM_{b}O_{c} having a desired particle size distribution;
(b") calcining the said AₐM_{b}O_{c} powder from stage (b'),
(b"') mixing the said powder obtained after the calcining of stage (b") with a second solvent S2 in order to form the said colloidal sol;
the said colloidal sol thus formed consists of one or more calcined oxides of metals and one or more solvents.

2. Process according to Claim 1, **characterized in that** stage (b') for providing the powder of desired particle size distribution comprises the grinding of the said powder of oxide AₐM_{b}O_{c}.

3. Process according to Claim 1 or 2, additionally comprising a stage of doping by deposition of a dopant Z at the surface of the powder, preferably in the form of a suspension or solution of the dopant Z in a solvent S3, in which the dopant Z is preferably selected from the oxides of transition metals of Groups 3A, 3B, 4 and/or 13 of the Periodic Table, preferably chosen from the group consisting of Al₂O₃, La₂O₃, ZrO₂, TiO₂, SiO₂, Li₇La₃Zr₂O₁₂, LaZrO, Li₂ZrO₃ and La₂Zr₂O₇, or a mixture of these oxides, in order to form a powder of formula AₐM_{b}O_{c} as defined in Claim 1(a) doped with the dopant Z.

4. Process according to Claim 3, **characterized in that** the proportion of the dopant Z in the colloidal sol is from 0 to 5% by weight of the colloidal sol.

5. Process according to any one of the preceding claims, **characterized in that** S2 is selected from the group consisting of:
• water and
• organic solvents exhibiting at least one alcohol functional group and having a saturated or unsaturated and linear or branched chain and preferably having a boiling point of less than 150°C at atmospheric pressure, preferably selected from methanol, ethanol, propan-1-ol, isopropanol, butanol, pentanol and methoxyethanol.

6. Process according to any one of the preceding claims, **characterized in that** the particles of the powder before the calcination stage (b") exhibit a d50 of between 0.1 and 10 µm.

7. Process according to any one of the preceding claims, **characterized in that** the said annealing stage (c") of the present process is carried out at a temperature of between 250°C and 500°C and advantageously for a period of time of between 30 seconds and 2 hours.

8. Process according to any one of the preceding claims, **characterized in that** the powder of oxide of transition metals of formula AₐM_{b}O_{c} as defined in Claim 1(a) is chosen from the group consisting of LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiNi_{0.5}Mn_{1.5-z}Ti_{z}O₄ where z is a number between 0 and 1.5, LiMn₂O₄, Li₄Mn₅O₁₂, LiNiO₂ and Li₄Ti₅O₁₂, the powder of oxide of transition metals preferably being of formula AₐM_{b}O_{c} is LiCoO₂, LiMnO₂, LiMn₂O₄, Li₄Mn₅O₁₂, LiNiO₂ or Li₄Ti₅O₁₂.

9. Process according to any one of the preceding claims, **characterized in that** the substrate used in stage (c') is brought to a temperature of between 30°C below the boiling point of the solvent S2 and 10°C above the boiling point of the solvent S2.

10. Process according to any one of the preceding claims, **characterized in that** stage (b") is carried out at a temperature of between 350°C and 800°C for a calcination time of between 1 and 15 hours.

11. Colloidal sol which can be obtained by a process according to any one of the preceding claims, the said colloidal sol consisting of:
• one or more oxides of transition metals of formula AₐM_{b}O_{c} as defined in Claim 1(a),
• a solvent S2 as defined in Claim 5, and
• optionally a dopant Z selected from oxides of transition metals of Groups 3A, 3B, 4 and/or 13 of the Periodic Table or a mixture of these oxides, with or without a solvent S3.
The said colloidal sol is prepared by:
(b') providing the said powder AₐM_{b}O_{c} having a desired particle size distribution;
(b") calcining the said AₐM_{b}O_{c} powder from stage (b'),
(b''') mixing the said powder obtained after the calcining of stage (b") with a second solvent S2 in order to form the said colloidal sol.

12. Colloidal sol according to Claim 11, **characterized in that** the solvent S2 is chosen from water and organic solvents exhibiting at least one alcohol functional group and having a saturated or unsaturated and linear or branched chain, the said organic solvents preferably having a boiling point of less than 150°C at atmospheric pressure, preferably of less than 110°C.

13. Colloidal sol according to Claim 11 or 12, **characterized in that** the oxide of transition metals of formula AₐM_{b}O_{c} is chosen from the group consisting of LiCoO₂, LiMnO₂, LiNi_{0.5}Mn_{1.5}O₄, LiCr_{0.5}Mn_{1.5}O₄, LiCo_{0.5}Mn_{1.5}O₄, LiCoMnO₄, LiNi_{0.5}Mn_{0.5}O₂, LiNi_{1/3}Mn_{1/3}Co_{1/3}O₂, LiNi_{0.8}Co_{0.2}O₂, LiNi_{0.5}Mn_{1.5-z}Ti_{z}O₄ where z is a number between 0 and 1.5, LiMn₂O₄, Li₄Mn₅O₁₂, LiNiO₂ and Li₄Ti₅O₁₂, preferably from the group consisting of LiCoO₂, LiMnO₂, LiMn₂O₄, Li₄Mn₅O₁₂, LiNiO₂ and Li₄Ti₅O₁₂.

14. Colloidal sol according to any one of Claims 11 to 13 comprising a dopant Z and a solvent S3, Z being as defined in Claim 3 and the solvent S3 preferably being selected from the group consisting of:
• water and
• organic solvents exhibiting at least one alcohol functional group and having a saturated or unsaturated and linear or branched chain and preferably having a boiling point of less than 150°C at atmospheric pressure, preferably selected from methanol, ethanol, propan-1-ol, isopropanol, butanol, pentanol and methoxyethanol.

15. Colloidal sol according to any one of Claims 11 to 14, **characterized in that** the proportion of the dopant Z in the colloidal sol is from 0 to 5% by weight of the colloidal sol.
